# EUROPEAN PATENT APPLICATION

(11) **EP 1 990 244 A1**
(43) Date of publication of application: **12.11.2008**
(21) Application number: 07009274.7
(22) Date of filing: 09.05.2007
(51) Int. Cl.: B60R 21/203, B62D 1/10

(54) **Steering wheel assembly with stationary central portion**

(71) Applicant: KEY SAFETY SYSTEMS, INC., Sterling Heights, MI 48314 (US)
(72) Inventor: Poli, Valerio, 37049 Villa Barolomea (VR) (IT); Anselmi, Andrea, 37039 Tregnago (VR) (IT); Ridolfi, Roberto, 37039 Tregnago (VR) (IT); Ridolfi, Adolfo, 37039 Tregnago (VR) (IT)
(74) Representative: Gislon, Gabriele

(57) **Abstract**

A steering wheel assembly (1) has a stationary central portion on which an airbag module can be fixed without being subject to rotation. The assembly comprises a steering wheel armature (5), having a hub portion (18) and spokes (2), wherein the hub portion (18) is fixable to a conventional steering column shaft (6). The assembly further comprises a first drum (9) supported on the steering column shaft (6), to freely rotate about the axis of the steering column shaft (6) only, and a second drum (10) being freely rotatable with respect to the first drum (9) about a second axis only, which is parallel or incident to of the steering column shaft (6). Stationary means (11) are provided for supporting the second drum (10) on the first drum (9). Both drums (9, 10) are engaged by the armature spokes (2) engaging their side wall. Advantageously the support (11) provides a stationary portion onto which an airbag module or other devices can be mounted.

## Description

The present invention relates to a steering wheel assembly having a stationary central portion, in particular to a steering wheel assembly having a stationary driver airbag module.

A conventional driver airbag module is mounted on a vehicle steering wheel, usually fixed to a hub, which in turn is coupled to a steering shaft. Consequently a driver airbag module rotates in unison with the steering wheel. Since the deployment of the airbag may occur at different rotation angles of the steering wheel with respect to the vehicle driver, the airbag has to be circular or symmetrical shaped to always provide a protection surface of the same shape to the driver.

In some motor vehicles, for instance sport cars, the maximum diameter of the airbag is limited by the high inclination of the windscreen and the front door frames. Recently, assemblies have been provided that allow a driver airbag module to remain in a stationary position with respect to the vehicle during rotation of the steering wheel. This type of airbag module is known as a stationary driver airbag module. Advantageously, stationary driver airbag modules may provide airbags having shapes other than circular, since there is no rotation of the same with respect to the driver. Stationary driver airbag modules allow for localized increases of the airbag volume. Thus airbags may be designed to fit the internal volume of a particular vehicle when deployed to better protect the driver regardless of the angular position of the steering wheel.

Different solutions have been provided for stationary mounting a driver airbag module on a steering wheel.

US 2003/0067147 A1 discloses a stationary driver airbag assembly that comprises a rotatable steering wheel encompassing an accessible space and coupled to the respective shaft by a planetary gear system. The planetary gear system transfers torque applied to the steering wheel ring portion directly to the steering shaft. An airbag module is positioned within the accessible space encompassed by the steering wheel and remains in a stationary position during rotation of the steering wheel.

DE 2131902 discloses a steering wheel provided with a non rotating driver airbag module. Rotation of the steering wheel is transmitted to the steering shaft either directly, by matching the internal teeth of the steering hub with the external teeth of the shaft, or indirectly by way of planetary gears interposed between the hub teeth and the shaft teeth. In both cases a space is left between the shaft and the steering hub for housing of both the electric wires and the stationary support elements to which the driver airbag module is fixed. This is achieved for the steering hub and the respective shaft a gear ratio different than 1:1, i.e. by providing the hub with a greater diameter than the shaft and using the gap between them for the passage of the wires and the stationary support elements.

Solutions employing planetary gears, such as the solution shown in fig. 2 of DE 2131902, have several drawbacks. First, the steering wheel is not directly mounted on the steering shaft leaving a discontinuity in the structure. Because of the increasing of the mechanical clearance that occurs as the gears get worn with usage, rotation of the steering wheel does not match with the rotation of the steering shaft. Moreover, when planetary gears are provided for connecting the steering hub to the steering shaft, it is necessary that the assembly gears have exact dimensions to avoid damping of the force transmitted by the driver to the steering shaft or the occurring of an offset between the rotation angle of the steering wheel ring portion and the rotation of the steering shaft. If one of the stationary driver airbag module components has dimensions different from what is specified, a non-uniform rotation of the steering wheel ring portion may occur, for example due to the imperfect matching between the gears.

Another drawback is that rotation of the steering shaft is in the opposite direction with respect to the rotation imparted by the driver to the steering wheel ring portion. The steering box of the vehicle has to be designed to overcome such a drawback to reverse the direction of rotation imparted by the steering shaft to the vehicle wheels. This leads to an increase in the vehicle production costs.

More generally, prior art assemblies provided with gears for coupling the steering hub to the steering shaft are complicated and require high accuracy in the manufacture of the gears, with evident increasing in production time and costs.

DE 3413009 A1 discloses a steering wheel provided with a stationary driver airbag module wherein the steering wheel hub is directly coupled to a steering shaft in a conventional way. Two gears are provided for maintaining the driver airbag module stationary: a first gear matching the driver airbag module and a second gear matching the steering shaft. The first and the second gear are coupled to the same driving shaft which is rotatably lodged within a seat of the steering hub. When the driver rotates the steering wheel ring portion, the second gear is rotated about its own axis by the steering shaft and is also rotated about the steering wheel's axis of rotation by the steering wheel hub pushing the driving shaft. The same movement is transmitted by the driving shaft to the first gear. The gear ratio between the first gear and the driver airbag module and between the second gear and the steering shaft is chosen such that the driver airbag module rotates in the opposite direction with respect to the steering wheel ring portion, thereby remaining stationary.

Such a solution requires two expensive "clock spring" connectors to be used for cabling the driver airbag module. A first connector is arranged on the steering shaft side of the hub and a second connector is arranged on the driver side of the hub, wired to the first one through the same hub. Another drawback of the solution according to DE 3413009 A1 is that the coupling of the driving shaft with the respective seat provided in the steering hub is critical. Inaccuracy in the machining of the seat may easily lead to misalignment of the first and second gears, thereby inducing small movements of the driver airbag module when the steering wheel ring portion is rotated.

US 4,541,301 discloses a steering wheel assembly wherein the driver airbag module is supported stationary by a coiled element that screws or unscrews itself through a hub opening when the steering wheel is rotated clockwise or counter clockwise. The coiled element has a first end coupled to a stationary portion of the vehicle, a second end fixed to the module and wound around the steering shaft. The main drawback of such solution is that the coiled element does not sufficiently resist torsion to avoid the driver airbag module from incurring in small movements. In other words, due to its shape, the coiled element does not provide the necessary mechanical strength to maintain stationary the driver airbag module in all the operating conditions.

US 200310164060 A1 discloses a steering wheel for a vehicle provided with a second shaft other than the steering shaft. The second shaft is supported via bearings by a stationary hub, which includes a driver airbag module housing, such that it is rotatable about its own axis and is coupled to the steering shaft by an arm or an electronic actuator. The actuator includes a position sensor for detecting an angular displacement of the second shaft from a selected origin and producing a signal indicative of the angular displacement. Such a signal is transmitted to a road wheel actuator so that the position of the road wheels properly corresponds with the position of the steering wheel.

Generally, solutions based on a plurality of shafts are complicated and expensive. Duplication of the steering shaft facilitates passing the airbag module wiring harness easily inside the steering wheel column, but requires accurate design and assembly, expensive mechanical components and eventually electronic devices. Moreover, conventional assemblies provided with a plurality of gears or shafts are cumbersome. Consequently, vehicle steering columns, i.e. the various components of the vehicle around and comprising the steering shaft, have to be re-designed to accommodate such assemblies.

FR 2833916 discloses a steering wheel wherein the driver airbag module is kept quasi-stationary by an electric motor that rotates the driver airbag module in the opposite direction with respect to the steering wheel ring portion but for an initial angle. Such a solution is cumbersome, complicated, expensive and difficult to assemble and to set. Moreover an electronic control unit is needed to sense the rotation of the ring portion of the steering wheel and operate the motor consequently.

Therefore, there is a need for a reliable and compact driver airbag module assembly that does not rotate with the steering wheel and that can be fitted on existing steering columns without having to re-design the same.

The present invention provides a steering wheel having a stationary central portion which overcomes the drawbacks of known solutions, being at the same time economical, reliable and simple to manufacture and assemble.

The present invention further provides a steering wheel having a stationary central portion that overcomes the drawbacks of prior art solutions related to the mechanical coupling between the steering wheel and the steering shaft and at the same time overcomes the drawbacks of prior art solutions related to the electrical connections of the driver airbag module.

The present invention further provides a steering wheel having a stationary central portion that can be directly used on common steering columns with no need for re-designing of the said columns.

The present invention further provides a steering wheel having a stationary central portion wherein the steering wheel can be directly connected to a steering shaft in a conventional way.

These and other features are provided by the steering wheel according to claim 1 of the present invention.

Generally, the steering wheel assembly comprises a steering wheel armature having a rim connected to a central hub portion by at least one spoke, to form a rigid structure. The central hub portion preferably has a suitable shape that permits conventional coupling to a conventional vehicle column shaft, for instance by a mortice and tenon coupling. In other words, with the term "central hub portion" is intended to mean any portion of the steering wheel armature, or any element coupled to the steering wheel armature, adapted to be fixed to the steering shaft. For instance, the spoke(s) may be shaped to have a central hub portion joining the steering shaft. The assembly further comprises a stationary support onto which the DAB and/or other devices can be mounted. The stationary support comprises at least two portions, separated and spaced along the steering shaft. To connect together the two portions of the stationary support, two connecting elements in the form of drums are provided. A first drum is coaxial with the steering shaft of the vehicle and is arranged to freely rotate about the column shaft axis only. A second drum is freely rotatable about a second axis only, which is parallel or incident to the column shaft axis. The stationary support provides for positioning of the second drum with respect to the first drum, with minimum clearance between such components; preferably the second drum is housed within the first drum.

The term "drum" generally identifies an element having any section, for instance circular, triangular, quadrangular, pentagonal, hexagonal, octagonal, etc., and an axis of rotation. In the preferred embodiment the drums have a circular section.

Both the first drum and the second drum are engaged by the armature spokes engaging their side wall. In other words the spokes of the steering wheel armature engage corresponding slots provided through the side wall of the first drum and the second drum. Clockwise and counter-clockwise rotations imparted by the driver to the rim are directly transmitted to both the first drum and the second drum by the armature spokes engaging respective slots provided through the lateral wall of the drums. Each drum slides on respective supports, preferably bearings.

When the driver rotates the rim of the steering wheel, thereby rotating the spokes about the steering wheel's axis of rotation, the support of the second drum provides a stationary portion, on which a driver airbag module or other devices can be coupled without being subjected to rotation. In other words, rotations of the rim cause correspondent rotations of the spokes, the first drum and the second drum about the respective axes, but do not affect the support, which remains stationary. In particular, the second member of the support, which is positioned toward the driver side of the assembly, provides a stable, stationary mounting surface for an airbag module or other devices.

According to a first embodiment of the present invention, the first drum (external) is rotatably supported coaxial with the column shaft and the second drum (internal) is rotatably supported parallel with the first drum. In other words, the first drum is coaxial with the steering wheel's axis of rotation and is permitted to rotate only about the steering column axis, while the second drum has its only axis of rotation arranged parallel to the steering wheel's axis of rotation.

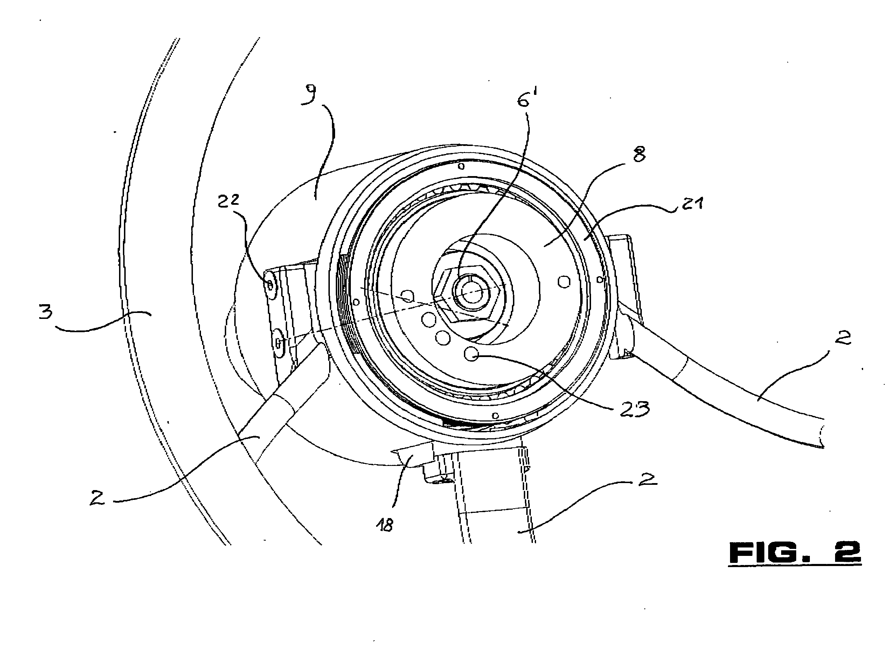

According to a second embodiment of the present invention, the first drum (external) is rotatably supported coaxial with the column shaft and the second drum (internal) is rotatably supported inclined with respect to the first drum. In other words, the first drum is coaxial with the steering wheel's axis of rotation and is permitted to rotate only about the steering column axis, while the second drum has its only axis of rotation incident with the steering wheel's axis of rotation. Preferably the second drum is inclined about 8 to 14 degrees with respect to the first drum, more preferably about 12 degrees (the second axis forms an angle of 12 degrees with the steering column axis, which coincides with the steering wheel's axis of rotation). In the embodiment shown in figures 2 to 6, the steering column shaft axis and the second axis are incident at half the length of the first drum.

In both the first and the second embodiments, bearings are provided for supporting the first and the second drums so that they can be free to rotate with respect of the two portions of the stationary support. Preferably at least two bearings are provided for supporting each drum. The bearings may be ball-bearings, roller bearings, self-oiling bearings, bearing linings, etc., which resist axial and radial loads and have axis of rotation strictly coaxial with the respective geometrical axis. Preferably the assembly is provided with ball-bearings that may be of different types, for example radial ball-bearings, i.e. bearings capable of resisting radial loads or radial-oblique ball-bearings, i.e. bearings capable of resisting main radial loads and minor axial loads, axial-oblique ball-bearings, i.e. bearings capable of resisting main axial loads and minor radial loads. Alternatively, the assembly may be provided with both axial and radial ball-bearings.

In general the bearings on which the first and the second drums rotate (at least two bearings for each drum, i.e. at least four bearings) fit onto the support. The support comprises a stationary first member, which has a through hole wherein the steering shaft rotates, having the function of supporting at least one bearing of the first drum and at least one bearing of the second drum, and a stationary second support member, which has a hole therethrough to receive the steering shaft, to support at least one bearing of the first drum and at least one bearing of the second drum. The first support member and the second support member are positioned along the steering shaft, separated by the central hub portion of the armature lying in between. The first support member is located on the side of the column shaft facing the vehicle front, while the second support member is located on the side of the column shaft facing the driver's seat. The central hub portion does not rotate about the two support members, but remains separated from the same, to avoid any friction during operation of the assembly. The distance between the first and the second support members depends on the lengths of the two drums. The first support member is fixed to a stationary part of the vehicle, such as the steering column shaft cover or "jacket", for instance by clamps and screws.

The bearings fit suitable seats provided on the external surface of the first and second support members. The skilled person will understand that if the drums are positioned on parallel axes, the bearing seats are also parallel, while if the second drum is inclined with respect to the first drum, the seats of the bearings of the second drum are inclined with respect to the seats of the bearings of the first drum.

In both the first and second embodiments of the present invention, the second member of the support has a portion extending through the wall of the first drum, which is the external one, to face directly the driver's seat and the driver. This portion of the second member of the support is stationary, i.e. is not subject to rotation with the armature of the steering wheel. A driver airbag module or like devices may be mounted in a stationary manner on the portion of the second support member extending toward the driver, around the steering shaft.

The electric conductors provided for the airbag module and other devices installed on the steering wheel are arranged to be coupled to the stationary components of the assembly. A flexible coil may be used, for instance of the type disclosed in the EP 1707469 A, providing a seat for the steering wheel electric conductors, being fixed to the first member and the second member, and spiralling through the central hub portion of the armature, thereby bringing the electrical conductors, such as wires, at the stationary portion of the second support member intended to support a driver airbag module or other devices.

Alternatively two clock-spring connectors may be used, as will be described with reference to the drawings.

Functioning of the steering wheel assembly according to the present invention is simple. The driver rotates the rim as usual, thereby imparting rotation to the steering wheel shaft through the armature spokes and hub portion. The same rotation is also transmitted to the first drum and the second drum, in that at least one spoke engages corresponding slots that open through the side surface of both drums. As the first drum is permitted to rotate only about the steering wheel's axis of rotation, and the second drum is permitted to rotate only about the second axis, being parallel or incident to the steering wheel's axis of rotation, no rotation is imparted to the support. In other words the first and the second support members remain stationary, thereby providing a non rotating surface onto which an airbag module or other devices are to be mounted.

In other words, rotation of the support is completely stopped because the first (external) drum stops the rotation about the second axis and, at the same time, the second (internal) drum stops the rotation about the steering wheel's axis of rotation. The constraints provided by the drums mutually stop the support members.

The steering wheel assembly according to the present invention overcomes drawbacks of the prior art solutions. The assembly does not require any modification to be provided for the column shaft, i.e. the assembly is ready to be fitted on common column shafts of conventional vehicles. Once all the components are pre-assembled together, the steering wheel can be fitted on the steering shaft in a known way, and the first support member has only to be clamped to the column shaft covering or jacket.

The assembly provides no toothed gears, which are expensive and require strict tolerances.

The driver airbag module and the other devices mounted on the stationary portion of the assembly rest on the support, which in turn is fixed to the steering column covering (jacket). In other words, the column covering resists the weight of the support, the driver airbag module and other devices arranged on the steering wheel in a stationary manner. Moreover, the same column covering provides for centering the support, the devices coupled to the same and the driver airbag module, with respect to the steering wheel's axis of rotation. This arrangement has beneficial effects on the assembly, in that the rotating components do not support the weight of the stationary components. Vibrations of the rotating components, such as the rim, are thereby minimized.

The overall dimensions of the assembly are comparable to, or smaller than, those of a conventional steering wheel provided with an airbag module. The assembly of the present invention can be fitted to existing vehicles without having to re-design the steering column.

The assembly of the present invention has proven to be reliable and simple to pre-assembled before mounting on vehicles. The stationary portion of the second support member is stable during rotation of the rim by the driver, thereby allowing installation of any airbag module or electric devices.

The electric conductors of the airbag module or other devices stationary manner are easy to lodge within the same assembly. The electrical conductors, such as wires, are coupled to a plastic coil associated to the support members. As alternative, electric connections are provided by coupling two clock-spring connectors.

The invention will now be described in greater detail with reference to the drawings enclosed as a non-restrictive example, where:
figure 1 is a perspective view of a steering wheel according to the present invention, in an assembled configuration;
figure 2 is a perspective front view of a first embodiment of the steering wheel according to the present invention, in a pre-assembled configuration;
figure 3 is a front view of a component of the steering wheel shown in figure 2;
figure 4 is a side view of the component shown in figure 3;
figure 5 is a perspective front view of a particular of the steering wheel shown in figure 2;
figure 6 is a perspective side view of the particular of the steering wheel shown in figure 5;
figure 7 is a perspective front view of a second embodiment of the steering wheel according to the present invention, in a pre-assembled configuration;
figure 8 is a front view of a component of the steering wheel shown in figure 7;
figure 9 is a side view of the component shown in figure 8;
figure 10 is a perspective front view of a particular of the steering wheel shown in figure 7;
figure 11 is a perspective side view of the particular of the steering wheel shown in figure 10;
figure 12 is a perspective view of the armature of the steering wheel according to the present invention;
figure 13 is a perspective view of a detail of a steering wheel assembly according to the present invention;
figure 14 is a perspective view of a detail of the embodiment shown in figures 5 and 6; and
figure 15 is a perspective view of a detail of the embodiment shown in figures 10 and 11.

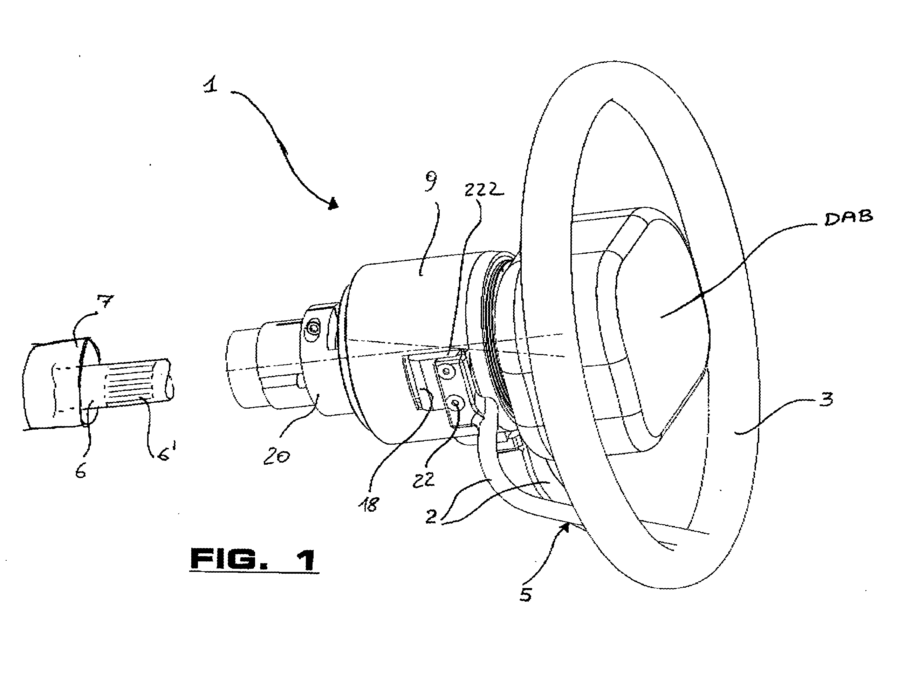

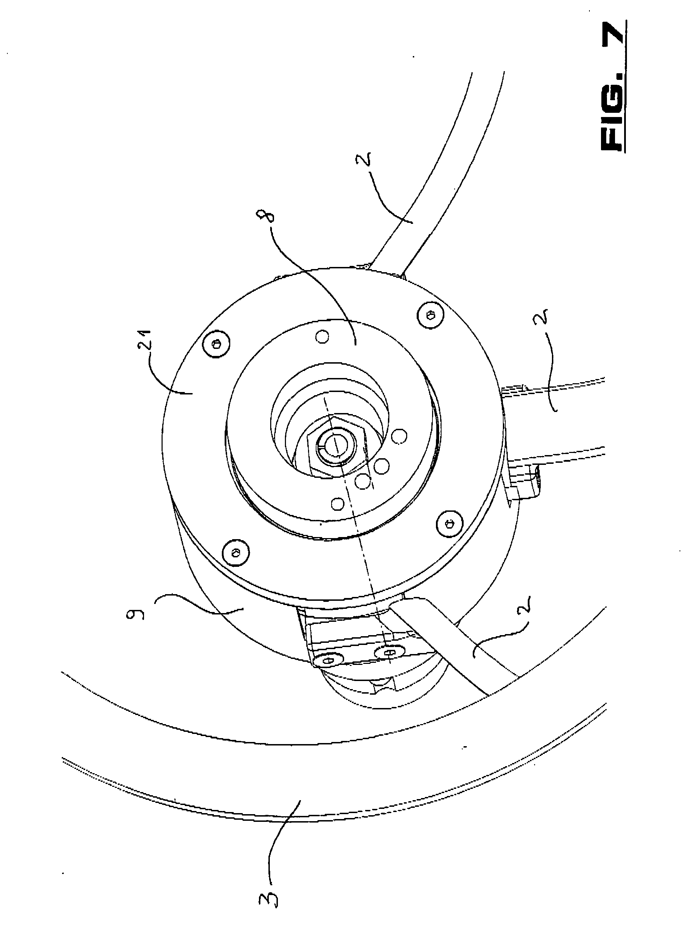

Figures 2 to 6 show a first embodiment of an assembly according to the present invention. Figure 7 to 11 show a second embodiment of an assembly according to the present invention. Figure 1 shows an assembly according to the present invention (either the first embodiment or the second embodiment), in a pre-assembled configuration.

With particular reference to figure 1, the assembly **1** of the present invention comprises a steering wheel armature **5,** which in turn comprises a rim 3 connected to a central hub portion **18** by at least one spoke **2,** and preferably two or three spokes **2.** The central hub portion **18** is fixable to a vehicle's steering column shaft **6,** for instance a conventional steering column shaft 6 of a car. The assembly **1** is provided with a stationary central portion onto which a driver side airbag module DAB is fixable, as shown in figure 1, as well as other electric devices, such as switches, buttons, radio controls, navigation system buttons, etc.

The assembly **1** shown in figure 1 is pre-assembled, that is ready to be fitted on the steering shaft 6 of the respective vehicle. Installation can be completed simply by fitting the hub portion of the armature onto the machined portion **6' of** the steering shaft **6** and by locking a stationary portion of the assembly onto the steering shaft covering or jacket **7.**

The assembly 1 shown in figure **2** is fitted on the machined portion **6'** of the steering shaft **6** of the respective vehicle. For clarity the driver airbag module is not shown. The assembly includes a stationary central portion **8** onto which a stationary element including the driver airbag module and/or other devices is to be coupled, so as not to be affected by rotation of the rim **3** by the driver.

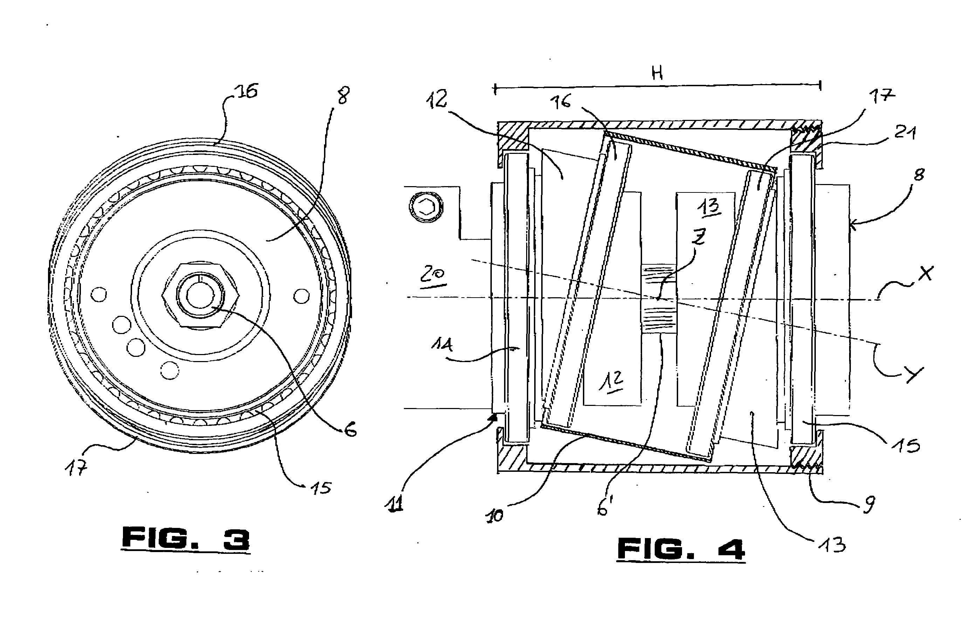

With reference to figures 3 and 4, the assembly **1** comprises a first drum 9 and a second drum **10.**

The term "drum" generally identifies an element having a main axis of rotation as above mentioned, independently on its shape. A drum according to the invention may be made of a plurality of elements directly or indirectly connected to form a body rotatable around its axis. The drums **9,10** may have any section, for instance circular, triangular, quadrangular, pentagonal, hexagonal, octagonal, etc.. In the embodiment shown in the figures, the drums **9,10** have a generic cylindrical shape and are preferably made of metal. In the embodiments shown in figures 1-11 the first drum **9** is external to the second drum 10, but in general the assembly may provide for the contrary.

In both the first and second embodiments, the first drum **9** is arranged to freely rotate about the steering shaft's axis of rotation **X.**

In the first embodiment the second drum **10** is arranged to freely rotate about a second axis **Y,** which is inclined with respect to the steering shaft's axis of rotation **X,** as shown best in figure **4****.** The second axis **Y** preferably intersects the steering shaft's axis of rotation **X** at the point **Z.** The angle between the axes **X** and **Y** is about **8** to **14** degrees, preferably **12** degrees. According to the preferred first embodiment, point **Z** of intersection between the axes **X** and **Y** is located at half the length **H** of the first drum **9,** thereby minimizing the size of the entire assembly **1.**

The assembly **1** is provided with a stationary support **11** having the function of providing a stationary element **8** for the DAB and/or other devices, and of supporting both drums **9, 10** on the respective axes **X** and **Y.** The support comprises a first support member **12** and a separate second support member **13,** both positioned, at least in part, inside the external drum **9.** The first support member **12** is positioned on the side of the assembly **1** facing the vehicle steering column, while the second support member **13** is positioned on the side facing the driver's seat and the driver. The first and second support members **12, 13** are preferably machined metal parts provided with seats, such as grooves, for lodging the bearings assisting rotation of the drums **9,10.** The steering shaft **6** rotates inside the support members **12,13** when the driver acts on the rim **3,** but as it will be explained below, the same support members **12, 13** remain stationary. The support members **12,13** generally have an annular shape and the steering shaft **6** is inserted in their central hole. Preferably the shaft **6** rotates within the support members **12, 13** without touching the internal surfaces thereof. In other words, the diameter of the central hole of the support members **12,13** is larger than diameter of the steering shaft **6,** to avoid any friction during rotation of the steering shaft **6.**

As shown best in figure **3** and **4****,** the first external drum **9** and the second internal drum **10** are supported by the support members **12,13** by interposition of bearings, preferably ball-bearings. Each drum **9, 10** is supported by at least two bearings. Two bearings **14,15** support the external first drum **9** in rotation about the steering shaft's axis of rotation **X** only. Two bearings **16,17** support the internal second drum **10** in rotation about the axis **Y** only. The drums **9** and **10** are thus operating also as "connection elements" to provide a mechanical connection between the two support elements **12** and **13** forming support **11.** In other words, the assembly provides for a direct connection of element **12** to a stationary portion of the vehicle and of element **13** to a stationary DAB including element. The two elements **12** and **13** are indirectly connected to each other by means of first and second drums **9** and **10** and the relevant bearings.

In general the bearings **14-17** may be ball-bearings, roller bearings, self-oiling bearings, bearing linings, etc., which resist axial and radial loads and have axis of rotation strictly coaxial with the respective geometrical axis.

Preferably the bail-bearings are "oblique" bail-bearing that withstand loads applied not only in the radial direction but also minor axial loads. As it can be seen in figures 3 and 4, the ball-bearings **14,15** are coaxial with the steering shaft's axis of rotation **X,** while the ball-bearings **16, 17** are coaxial with the axis **Y.** In this way the drums **9, 10** are permitted to rotate only about the respective axis **X** or **Y.**

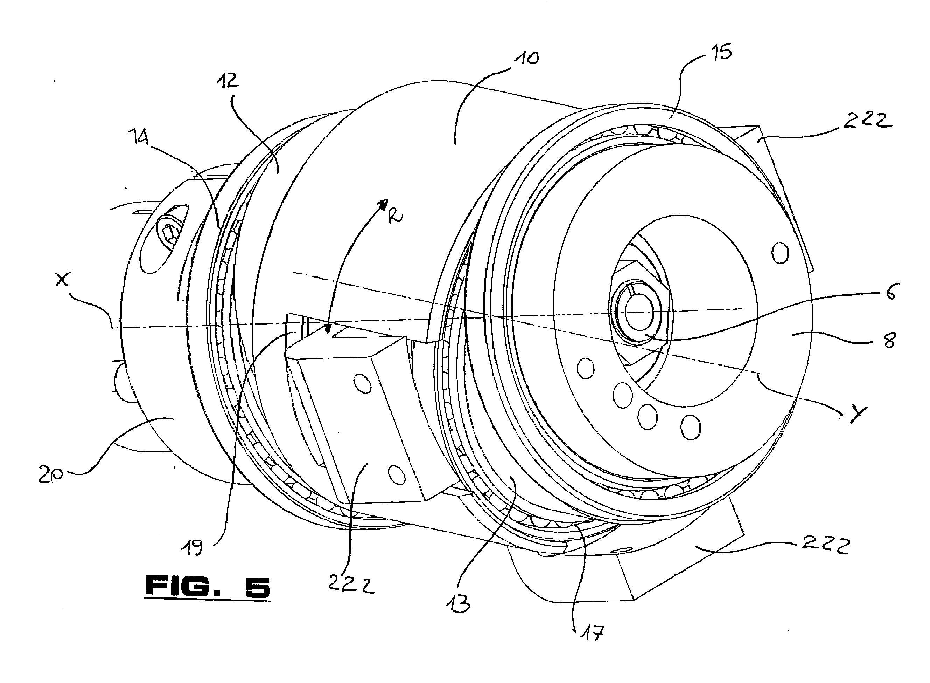

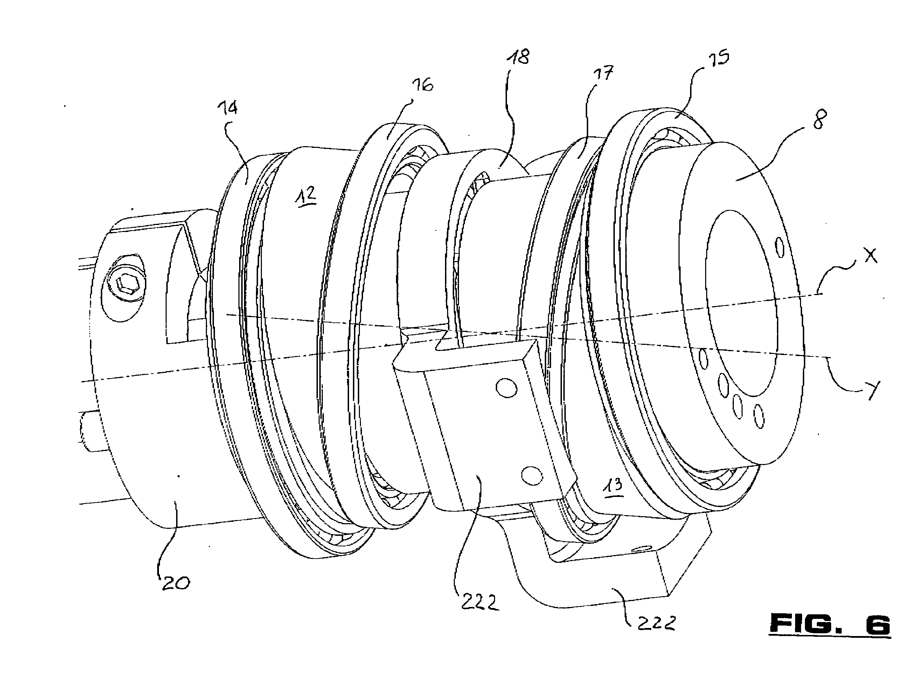

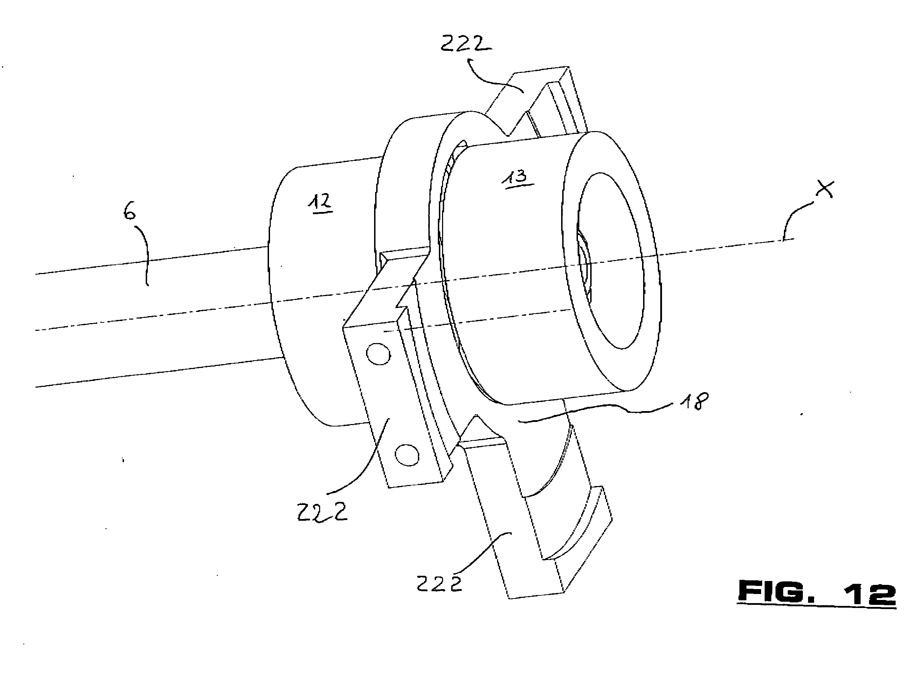

The first and second support members **12,13** are separated and spaced along the steering shaft's axis of rotation **X**, i.e. along the shaft 6 when the assembly is fitted on it, by interposition of the steering wheel hub portion **18** (figures 6 and 12). The hub portion **18,** which may be a separate element coupled to the other parts of the armature **5** or may be a spoke **2** itself, engages the machined portion **6'** of the shaft **6** in such a way that any rotation imparted by the driver to the rim **3** is directly transmitted to the steering shaft **6.** In figure **4** the spokes 2 and the hub portion **18** are not visible for sake of clarity. With reference to figures 4 to 6, the spokes **2** of the steering wheel armature engage the side wall of both the drums **9,10** and connect to the hub portion **18,** which is positioned internal the second drum **10.** This is achieved by providing the drums **9,10** with lateral slots **19** through which the spokes **2** are received. Figure 5 shows the steering wheel in transparency (extemal drum **9** is not shown) wherein the spokes **2** are inserted in respective slots, apertures, holes, openings or the like. Rotations **R** of the spokes **2** following the rim **3** are directly transmitted to the drums **9, 10** by the same spokes **2** abutting the slots **19.** The skilled person will understand that when rotation occurs, the spokes **2** generally may also slide a short distance in the slots 19 of the inclined internal drum **10.**

The armature **5** may be manufactured as a single part, in that the rim **3,** spokes **2** and hub portion **18** may be a single element. Preferably, as shown in figures 1 to 12, the armature **5** is formed by coupling separate elements, such as the hub portion **18** to the spokes **2,** which in turn are integral with the rim **3.** Having a separate hub portion **18** simplifies the pre-assembling of the steering wheel. In figure 1 screws **22** are used to lock the spokes **2** to the hub portion **18.**

As the second or internal drum **10** is allowed to rotate about its axis **Y** only, and the first or external drum **9** is allowed to rotate about the steering shaft's axis of rotation **X** only, the support **11** has no degree of freedom, thereby remaining stationary. In other words the first and second support members **12,13** are not affected by rotation of the rim **3** by the driver and provide for a stationary central surface **8** onto which a stationary element, e.g. including a driver side airbag module (DAB), can be mounted. In particular, the first support member **12** is fixed to a coupling element **20** provided with means to be clamped on the shaft covering or jacket **7.** As shown best in figure 4, the first support member 12 is fixed to the coupling element **20** through the external first drum **9.** The second support member **13** provides a portion **8** extending through the driver side end of the drum **9.**

The weight of the stationary support **11,** i.e. the weight of members **12, 13,** is hold by the steering column covering. Therefore possible oscillations of the hub portion **18,** for example caused by geometrical defects of the machined portion **6'** of the shaft **6,** do not affect the driver airbag module, i.e. do not impart oscillations to the stationary portion **8**.

Even if the first and the second support members **12,13** are not directly coupled, the link between them comprising the rotatable inclined drums **9,10** acts such that the same members **12,13** cannot rotate at all.

Figure 2 shows a pre-assembled configuration of the first embodiment, wherein the components internal to the drum **9** are pressed within the same drum **9,** with minimum clearance or no clearance at all, by a threaded ring **21** screwed in the drum **9** end facing the driver side. The ring **21** surrounds the stationary portion **8**.

The second embodiment of the assembly according to the present invention is shown in figures 7 to 11.

In the second embodiment the internal drum **10** is arranged to freely rotate about a second axis **Y** which is parallel to the steering shaft's axis of rotation **X** and the column steering shaft **6.** Figure 7 shows a pre-assembled configuration, wherein the components internal to the drum **9** are closed by a ring **21** clamped or screwed on the drum **9** end facing the driver side.

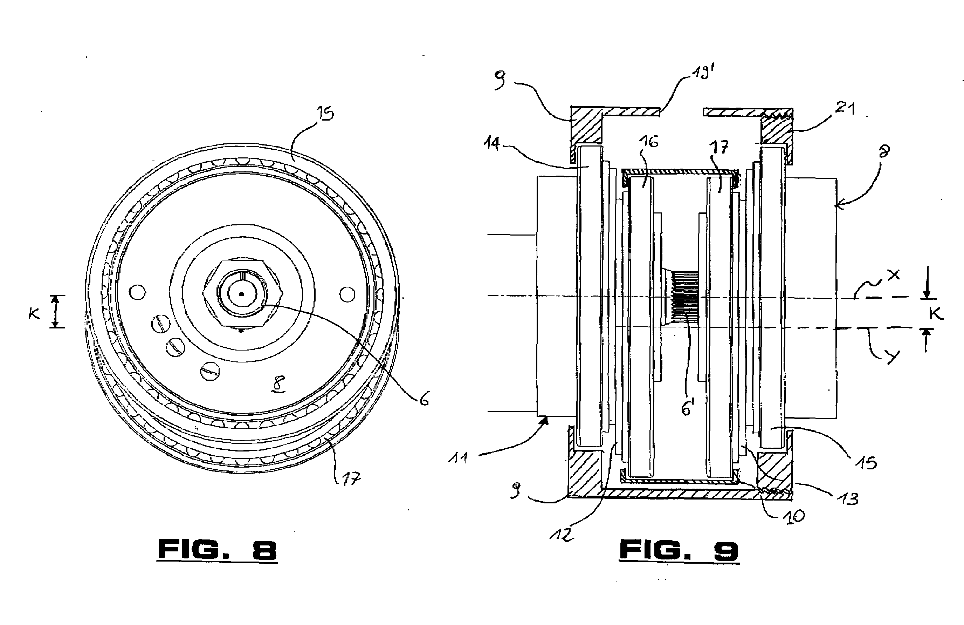

Figure 9 corresponds to figure 4 of the first embodiment. As it can be seen, now the axes **X** and **Y** are parallel. The ball-bearings **14,15** supporting the external drum **9** in rotation about the steering shaft's axis of rotation **X** are arranged on the support members **12**, **13**, respectively, parallel to ball-bearings **16,17** of the internal drum **10.** This is accomplished by providing parallel seats, such as grooves, for the bearings on the support members **12, 13.** The offset **K** between the axes **X** and **Y,** shown in figure 8, is about 5 to 15 mm.

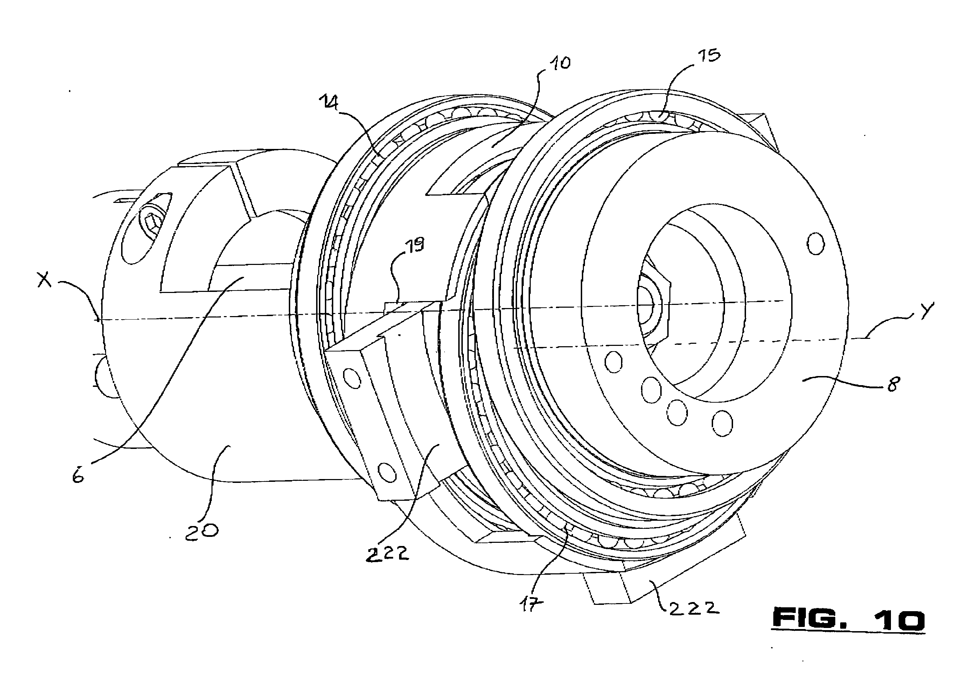

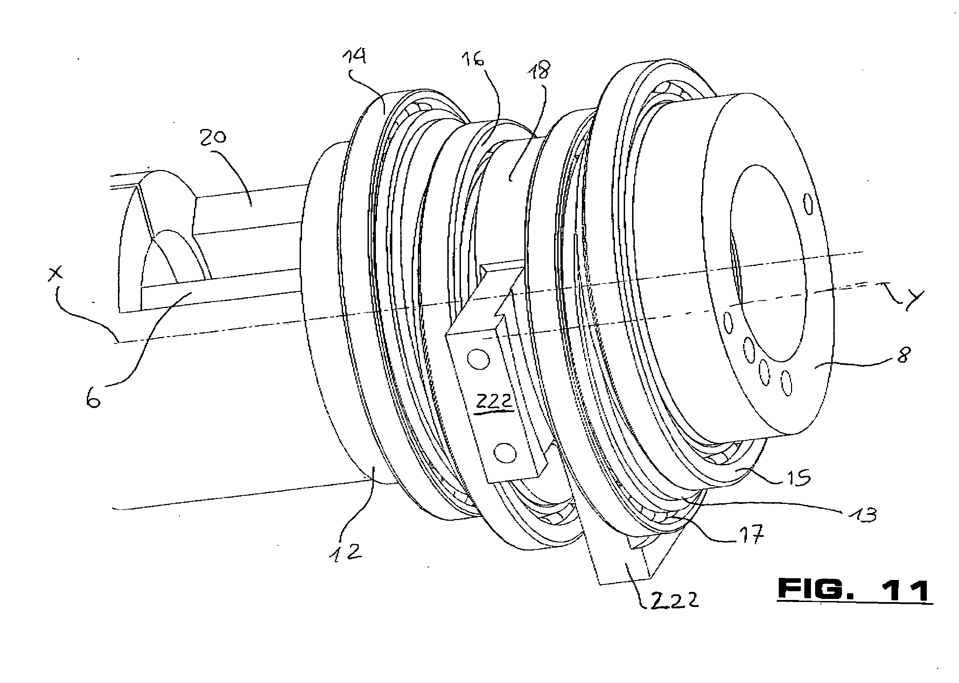

Figure 10 shows the assembly without the external drum **9** and figure 11 shows the assembly without the drums **9, 10.** The central hub portion **18** is provided with extensions **222** for allowing mechanical coupling with the spokes **2** and for rotating the drums **9, 10.** The hub portion **18** is mechanically coupled to the machined portion **6'** of the shaft **6** and separates the first support member **12** and the second support member **13** along the same steering shaft **6.** The spokes **2,** or equivalent extensions **222,** engage corresponding slots **19** of the internal drum **10** and slots **19'** (figure 9) of the external drum **9,** to impart rotation to both the drums **9,10** on the axes **X**, **Y** imparted by the driver.

Functioning of the second embodiment is equivalent to operation of the first embodiment. The drums **9, 10** are rotated by the force imparted by spokes **2** on their slots **19, 19'.** As the external drum can rotate about the axis **X** only and the internal drum **10** can rotate about the axis **Y** only, no motion is transmitted to the support **11,** i.e. the first and second support members **12, 13** remain stationary. A driver airbag module, as the one shown in figure 1, can be securely fixed to the support **11**, in particular to the portion **8** facing the driver and extending outside the first external drum **9.**

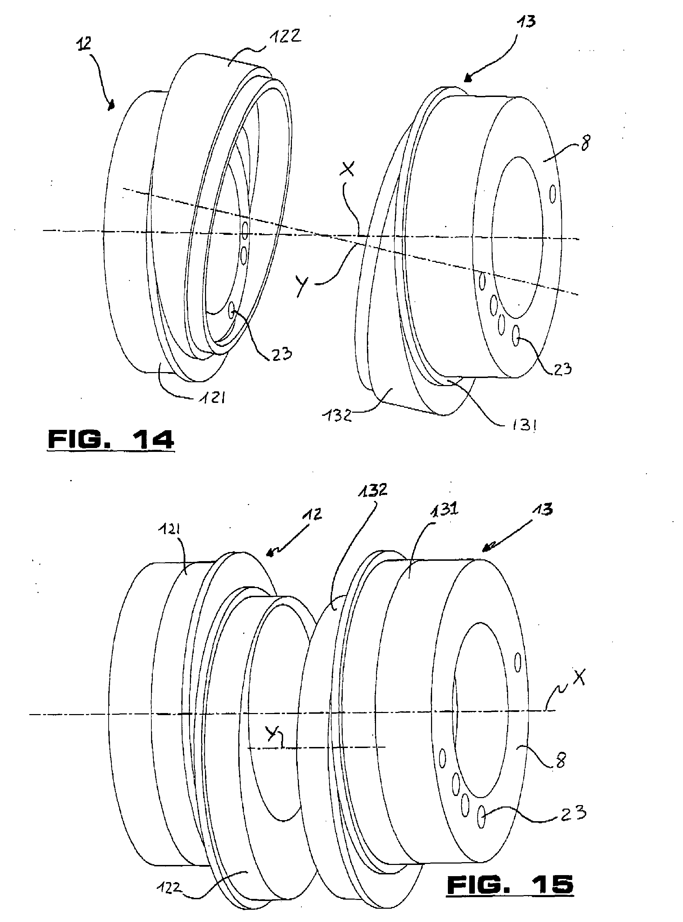

Figure 14 shows in detail the first support member **12** and the second support member **13** of the first embodiment of the assembly of the present invention. Generally, both members comprise a cylindrical portion **121, 131** which is symmetrical about the steering shaft's axis of rotation **X** for supporting respectively bearings **14, 15** coaxial with the same axis **X.** The bearings **14, 15** fit on the cylindrical portion **121, 131** or fit corresponding grooves provided on their surfaces. In particular, the ball-bearings **14, 15** are coupled to the respective cylindrical portion **121, 131** by interference fitting. Each support member **12,13** also provides a second cylindrical portion **122, 132,** preferably integral with the first portion **121, 131,** which is symmetrical about the axis **Y**, to support respective bearings **16, 17** coaxial with the axis **Y**. Ball-bearings **16, 17** fit on the respective cylindrical portion **122, 132** or fit correspondent grooves on the surface thereof. The ball-bearings **16, 17** are coupled to the respective cylindrical portion **122, 132** by interference fitting.

Figure 15 shows in detail the first support member **12** and the second support member **13** of the second embodiment of the assembly of the present invention. Generally, both members comprise a cylindrical portion **121, 131** which is symmetrical about the steering shaft's axis of rotation **X** for supporting respectively the bearings **14,15** coaxial with the same axis **X.** Each support member **12,13** also provides a second cylindrical portion **122, 132,** preferably integral with the first portion **121, 131,** which is symmetrical about axis **Y**, to support respective bearings **16, 17** coaxial with axis **Y**.

The first support member **12** and the second support member **13** are both provided with axial through-holes **23** wherein the electric conductors, such as wires, directed to the airbag module may pass.

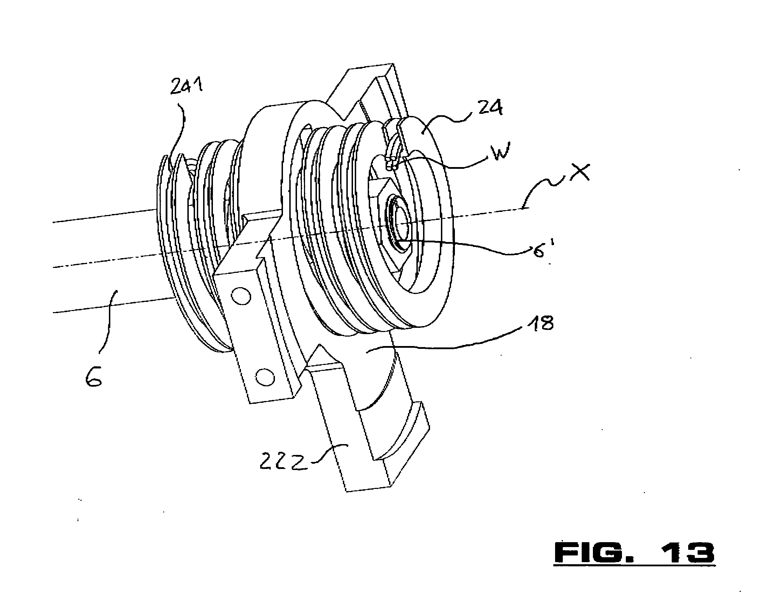

Electric conductors, usually needed for activation of the airbag module, can be lodged in a flexible coil, for instance made of a plastic material, of the type disclosed in EP-A-1707469. The coil **24** is shown in figure **13****.** The coil **24** brings the electric conductors **W** from a stationary portion of the vehicle, for instance the instrument board, trough the support **11,** at the stationary portion **8** where the airbag module driver airbag module or other electric devices are to be installed. The plastic coil **24** is provided with a lateral groove **241** wherein the electric conductors **W** are lodged. The coil **24** extends around the shaft **6** and is internal to the first support member **12** and the second support member **13.** The coil **24** is spiralled through the hub portion **18,** as described in EP-A-1707469, when the steering wheel is rotated. The electrical conductors **W,** exiting the groove **241** of the coil **24,** pass through the holes **23** of the support member **13** thereby reaching the driver airbag module on the stationary portion **8.**

Alternatively the assembly 1 is provided with two clock-spring connectors (not shown) coupled one to the other. A first connector can be arranged next to the first support member **12** and the second connector can be arranged next to the second support member **13.** A hole is provided through the central hub portion **18** through which connectors are electrically coupled.

Pre-assembling of either the first or the second embodiment of the steering wheel can be accomplished easily by inserting in the external drum **9,** in sequence, the first support member **12,** with its ball-bearings **14, 16** mounted on, the internal drum **10,** the central hub portion **18** of the armature, the second support member **13,** with its ball-bearings **15,17** mounted thereon, and by closing the external drum **9** with the cap **21,** thereby pressing all the aforementioned components within the same drum **9** with minimum or null clearance. In the pre-assembled configuration, shown in figures 1, 2 and 7, the steering wheel is ready to be fitted on the steering shaft **6** and to be clamped on the covering **7**.

Installation on the vehicle can be accomplished in an extremely short time by simply sliding the hub portion onto the steering shaft **6,** matching the machined teeth of both components. Then the coupling portion **20** is clamped onto the column shaft covering **7,** thereby locking the support **11** against any rotation.

Advantageously, the assembly **1** has not to be provided with toothed gears, such as planetary gears, which are expensive and require strict tolerances to avoid failures, and can be fitted on existing steering columns in a short time, with no need for re-designing the vehicle structures.

## Claims

1. A steering wheel assembly (1) comprising a steering wheel armature, including a central hub portion (18) fixable to a vehicle column shaft (6) and at least one spoke (2), further comprising:
a first drum (9) that is freely rotatable about the steering shaft's axis of rotation (X) only, and
a second drum (10) that is freely rotatable about a second axis (Y) only, which is parallel to or intersects the steering shaft's axis of rotation (X), and
stationary means (11) for providing a stationary portion (8) for a driver airbag module and/or other devices,
and wherein both the first drum (9) and the second drum (10) are rotated around their respective axes (X, Y) by the at least one spoke (2) engaging their side wall.

2. The steering wheel assembly according to claim 1, wherein the second drum (10) is internal to the first drum (9).

3. The steering wheel assembly according to claim 3, wherein said stationary means (11) comprises two supporting elements (12, 13) spaced along said shaft axis of rotation (X) and connected to each other by said first (9) and second (10) drum.

4. The steering wheel assembly according to claim 2 or claim 3, wherein the first drum (9) is supported coaxial with the steering wheel shaft (6) by at least two bearings (14, 15) and the second drum (10) is supported parallel or inclined with respect to the first drum (9) by at least two bearings (16, 17).

5. The steering wheel assembly according to claim 3 or claim 4, wherein the at least two bearings (14, 15, 16, 17) fit on the stationary means (11).

6. The steering wheel assembly according to any previous claim 1 to 5, wherein the stationary means (11) comprises a stationary first member (12), supporting at least one bearing (14) for the first drum (9) and at least one bearing (16) for the second drum (10), and a stationary second support member (13), for supporting at least one bearing (15) for the first drum (9) and at least one bearing (17) for the second drum (10), the first member (12) and the second member (13) being separated along the steering shaft (6) by the central hub portion (18) of the armature and connected together by said first and second drums (9, 10).

7. The steering wheel assembly according to claim 6, wherein the second member (13) of the stationary means (11) has a portion (8) extending toward the driver side, onto which a driver airbag module and/or like devices are to be mounted.

8. The steering wheel assembly according to claim 6 or claim 7, wherein the stationary first member (12) is fixable to the vehicle column shaft covering (7).

9. The steering wheel assembly according to any preceding claim 2 to 8, wherein the second axis (Y) is inclined with respect to the steering shaft's axis of rotation (X) of about 8 to 14 degrees.

10. The steering wheel assembly according to any preceding claim 2 to 9, wherein the steering shaft's axis of rotation (X) and the second axis (Y) are incident at half the length (H) of the first drum (9).

11. The steering wheel assembly according to any preceding claim 6 to 10, wherein it further comprises a flexible coil (24), providing a seat (241) for the steering wheel electric wirings (W), internal to the first member (12) and the second member (13), and spiralling through the central hub portion (18).
